(19) **Europäisches Patentamt European Patent Office Office européen des brevets**

(11) **EP 3 029 397 B1**

(12) **EUROPEAN PATENT SPECIFICATION**

(45) Date of publication and mention of the grant of the patent:
**23.09.2020 Bulletin 2020/39**

(21) Application number: **13890530.2**

(22) Date of filing: **01.08.2013**

(51) Int Cl.:
***F25B 49/02*** *(2006.01)*   ***F24F 1/22*** *(2011.01)*
***F24F 11/00*** *(2018.01)*

(86) International application number:
**PCT/JP2013/070890**

(87) International publication number:
**WO 2015/015617 (05.02.2015 Gazette 2015/05)**

(54) **HEAT SOURCE UNIT**

WÄRMEQUELLENEINHEIT

UNITÉ DE SOURCE DE CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.06.2016 Bulletin 2016/23**

(73) Proprietor: **Mitsubishi Electric Corporation Tokyo 100-8310 (JP)**

(72) Inventors:
• **ITO, Masahiro Tokyo 100-8310 (JP)**
• **NOMOTO, So Tokyo 100-8310 (JP)**
• **ITO, Takuya Tokyo 100-8310 (JP)**

• **OKOSHI, Yasushi Tokyo 100-8310 (JP)**

(74) Representative: **Pfenning, Meinig & Partner mbB Patent- und Rechtsanwälte Theresienhöhe 11a 80339 München (DE)**

(56) References cited:
EP-A1- 2 589 900       JP-A- H1 194 291
JP-A- H08 178 480       JP-A- 2001 208 392
JP-A- 2002 115 939      JP-A- 2002 115 939
JP-A- 2002 267 353      JP-A- 2002 372 317
JP-A- 2011 127 807      JP-B2- 3 407 441
US-A1- 2013 174 592

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a heat source unit applied to, for example, multi-air-conditioning apparatuses for buildings.

Background Art

There is a conventional heat source unit that includes a compressor, a heat exchanger, an air-sending device and a control box disposed in a housing and uses a flammable refrigerant having a density larger than that of air. In this type of the heat source unit, there is a risk that the flammable refrigerant may leak and start to accumulate in the lower part of the housing, and the refrigerant may be in contact with a control circuit provided in the control box in the housing, leading to ignition of the refrigerant. To avoid such a risk, a technique has been proposed in which a refrigerant leakage detection unit is provided in the housing to cause the air-sending device to perform reverse rotation when refrigerant leakage is detected so that air outside the housing is suctioned into the housing, thereby increasing the pressure in the housing and discharging the refrigerant accumulated in the housing (for example, see Patent Literature 1).

Further, according to another technique, a necessary volume of air is specified to decrease concentration of flammable refrigerant to the flammable limit concentration or lower (for example, see Patent Literature 2).

Citation List

Patent Literature

Patent Literature 1: Japanese Patent No. 3523584 (page 5, Fig. 5)
Patent Literature 2: International Publication No. WO 2012/049710 (e.g., page 3, Fig. 1)

Summary of Invention

Technical Problem

Although the type of the air-sending device is not specifically described in Patent Literature 1, the volume of air in a general axial flow air-sending device decreases in reverse rotation of the air-sending device compared with that in forward rotation. Thus, if the air-sending device is caused to perform reverse rotation when refrigerant leakage is detected, the discharged amount of leaked refrigerant may be less than expected.

Further, to prevent ignition of refrigerant, it is necessary to reduce the concentration of leaked refrigerant in the vicinity of the control circuit, which may become an ignition source, by increasing the volume of air in the vicinity of the control circuit. However, whether or not the volume of air in the vicinity of the control circuit can be increased by simply causing the air-sending device to perform reverse rotation as described in Patent Literature 1 is not determined because an airflow path configuration is involved.

Further, in Patent Literature 1, a refrigerant leakage detection unit is disposed at an upper position outside the control box. In this configuration, because the leaked refrigerant having a density larger than that of air starts to accumulate in the lower part of the housing, the refrigerant comes into contact with the control circuit before the refrigerant comes into contact with the detection unit. Thus, there is a risk that the leaked refrigerant may ignite before it is detected, posing a problem in that prevention of ignition is not sufficiently reliable.

Further, Patent Literature 2 does not specifically describe how to achieve the volume of air necessary to decrease the concentration of the flammable refrigerant to the flammable limit concentration or lower.

The present invention has been made to overcome the above problems, and has an object to provide a heat source unit that performs an appropriate air-sending device control considering a fan shape of the air-sending device and an airflow path configuration and increases the volume of air that passes through a control box when refrigerant leakage is detected compared with that during normal operation, thereby improving reliability of ignition prevention.

Solution to Problem

A heat source unit according to the present invention is disclosed in claim 1.

Advantageous Effects of Invention

According to the present invention, it is possible to perform an appropriate air-sending device control considering the fan shape of the air-sending device and the airflow path configuration and increase the volume of air from the air-sending device to pass through the control box to be the maximum volume of air when refrigerant leakage is detected, thereby improving reliability of ignition prevention. Brief Description of Drawings

[Fig. 1] Fig. 1 is a refrigerant circuit diagram of an air-conditioning apparatus having a heat source unit 100 according to Embodiment 1 of the present invention.
[Fig. 2] Fig. 2 is a view showing the heat source unit 100 of Fig. 1.
[Fig. 3] Fig. 3 is a view showing a control box 13 of Fig. 1.
[Fig. 4] Fig. 4 is a view showing a configuration example of a water infiltration prevention unit of the control box 13 of Fig. 1.
[Fig. 5] Fig. 5 is an explanatory view of a rotation direction of an air-sending device 6 of Fig. 1 and an airflow in the heat source unit in response to the rotation direction.
[Fig. 6] Fig. 6 is a flow chart showing an air-sending device operation of the heat source unit 100 according to Embodiment 1 of the present invention.
[Fig. 7] Fig. 7 is a view showing a heat source unit 100A according to Embodiment 2 of the present invention.
[Fig. 8] Fig. 8 is a view showing the control box 13 of Fig. 7.
[Fig. 9] Fig. 9 is an explanatory view of a rotation direction of the air-sending device 6 of Fig. 7 and an airflow in the heat source unit in response to the rotation direction.

Description of Embodiments

Embodiment 1

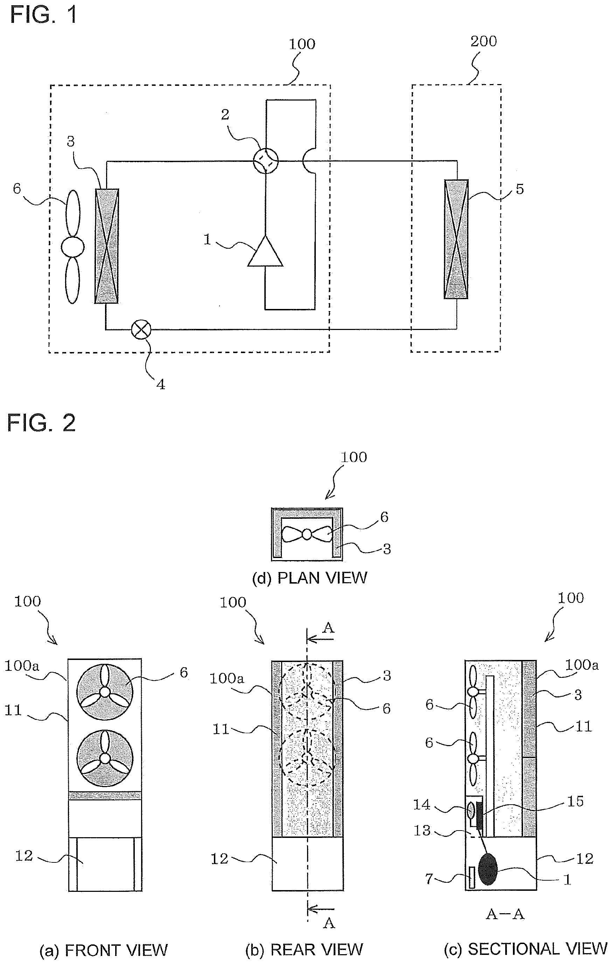

Fig. 1 is a refrigerant circuit diagram of an air-conditioning apparatus having a heat source unit 100 according to Embodiment 1 of the present invention.
The air-conditioning apparatus includes a compressor 1, a four-way valve 2 for switching between a flow direction of refrigerant during a heating operation and a flow direction of refrigerant during cooling operation, a heat source side heat exchanger 3, an expansion valve 4, a load side heat exchanger 5, and a refrigerant circuit connecting these components by a pipe. Further, the air-conditioning apparatus is provided with an air-sending device 6 that causes air through the heat source side heat exchanger 3 to promote heat exchange between air and refrigerant in the heat source side heat exchanger 3.
The compressor 1 compresses the suctioned refrigerant into high temperature and high pressure state.
The heat source side heat exchanger 3 and the load side heat exchanger 5 are air heat exchangers that allow refrigerant to exchange heat with air and include a plurality of fins on the surface of the pipes to increase the contact area with air.
The air-sending device 6 is rotatable in forward and reverse directions, and any of the air-sending devices described in (1) to (3) in Table 1 below may be applied to the air-sending device 6.
The heat source unit 100 includes the compressor 1, the four-way valve 2, the heat source side heat exchanger 3 and the air-sending device 6, while a load side unit 200 includes the load side heat exchanger 5. The refrigerant is a flammable refrigerant, and the loading amount of refrigerant is at least a volume of a machine chamber 12, which will be described later. The four-way valve 2 may not be necessarily provided and may be omitted.

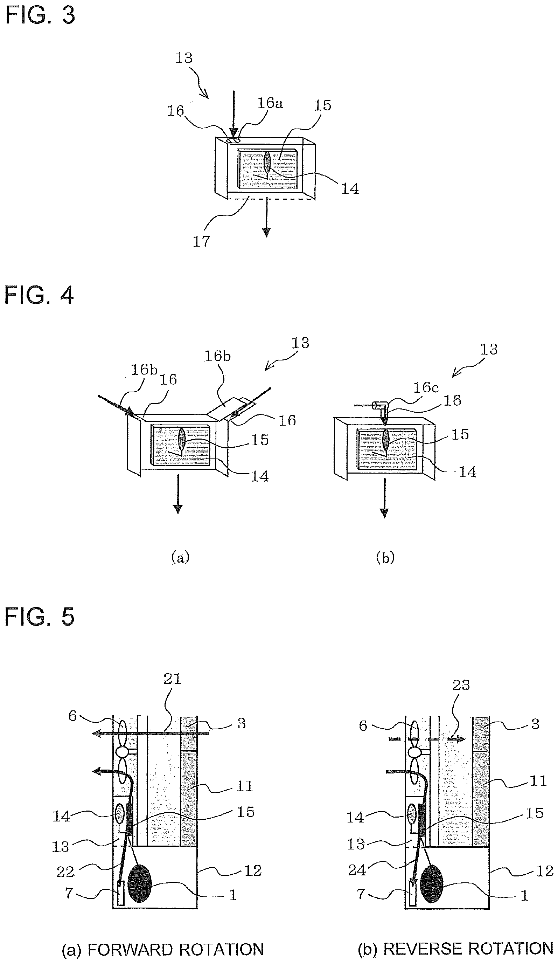

Fig. 2 is a view showing the heat source unit 100 of Fig. 1. (a) is a front view, (b) is a rear view, (c) is a sectional view, and (d) is a plan view. Fig. 3 is a view showing a control box 13 of Fig. 1. In Fig. 3, the arrow indicates a flow of air.
The heat source unit 100 includes a heat exchange chamber 11 provided in an upper part of a housing 100a, a machine chamber 12 provided in a lower part of the housing 100a, and the control box 13. The heat exchange chamber 11 contains the heat source side heat exchanger 3 and the air-sending device 6. Further, in the heat exchange chamber 11, the heat source side heat exchanger 3 is disposed at a position at substantially the same height as the air-sending device 6 to face the air-sending device 6.
In addition to the compressor 1, the four-way valve 2 and the expansion valve 4, which are not shown in Fig. 2, are disposed in the machine chamber 12. Further, an air ventilation port 7 is provided in a lower part of the machine chamber 12 of the housing 100a.
The control box 13 is provided between the air-sending device 6 of the heat exchange chamber 11 and the machine chamber 12. In the control box 13, a refrigerant concentration detection unit 14 that detects a refrigerant concentration and a control circuit 15 are disposed.

The control circuit 15 is formed by a microcomputer or another related device, and performs a normal operation (cooling operation, heating operation) by switching the four-way valve 2 while controlling the whole air-conditioning apparatus. Further, a refrigerant concentration detected by the refrigerant concentration detection unit 14 is input to the control circuit 15. The control circuit 15 performs a predetermined air-sending device control when refrigerant leakage is detected on the basis of the refrigerant concentration. The air-sending device control will be described later. During a normal operation, the air-sending device 6 usually operates with a maximum volume of air.

Further, the control box 13 includes an air ventilation port 16 formed on the control box 13 at a position close to the air-sending device 6 and an air ventilation port 17 on the control box 13 at a position close to the machine chamber 12 so that air from the air-sending device 6 flows through the control box 13. In this configuration, each air ventilation port is formed on the control box 13 at a position close to the air-sending device 6 and at a position close to the machine chamber 12. However, a plurality of air ventilation ports may also be formed. The air ventilation port may be any aperture that allows for ventilation to the outside such as a wire outlet through which the wire is connected to an external power supply.

A water infiltration prevention unit that prevents infiltration of rainwater and drained water is provided at the air ventilation port 16 at a position close to the air-sending device 6. Fig. 3 shows a mesh structure 16a as an example of the water infiltration prevention unit. The water infiltration prevention unit may also be a unit shown in Fig. 4, which will be described below.

Fig. 4 is a view showing a configuration example of the water infiltration prevention unit of the control box 13 shown in Fig. 1.

The control box 13 shown in Fig. 4 (a) includes the air ventilation ports 16 at two positions close to the air-sending device 6, and each air ventilation port 16 has a guide 16b as the water infiltration prevention unit. In Fig. 4 (b), the air ventilation port 16 has a bend 16c formed by a pipe is provided as the water infiltration prevention unit.

(Refrigeration cycle operation)

Next, an operation of the air-conditioning apparatus according to Embodiment 1 will be described with reference to Fig. 1.

(Cooling operation)

During cooling operation, the four-way valve 2 is switched as indicated by the solid line in Fig. 1. The gas refrigerant (chlorofluorocarbon) of high temperature and high pressure compressed by the compressor 1 of the heat source unit 100 flows through the four-way valve 2 and into the heat source side heat exchanger 3. The refrigerant flowing into the heat source side heat exchanger 3 is cooled and liquefied by exchanging heat with air from the air-sending device 6, and is then decompressed at the expansion valve 4. The refrigerant decompressed by the expansion valve 4 flows out of the heat source unit 100 and into the load side heat exchanger 5 of the load side unit 200. The refrigerant flowing into the load side heat exchanger 5 is evaporated and gasified by exchanging heat with room air and flows out of the load side unit 200. Then, the refrigerant flowing out of the load side unit 200 again flows into the heat source unit 100, and flows back into the compressor 1 via the four-way valve 2.

The refrigerant discharged from the compressor 1 is the refrigerant having the highest pressure and temperature in the refrigerant circuit. Thus, when the air-conditioning apparatus operates repeatedly, the pressure resistance of the compressor 1 or the discharge pipe of the compressor 1 may be decreased, leading to leakage of refrigerant from the vicinity of the compressor 1.

Refrigerant leakage may occur not only during activation of the compressor but also during deactivation of the compressor. The control box 13 having an electric contact may become an ignition source during deactivation of the compressor 1. Further, during activation of the compressor, the compressor 1 (wire connection section) may also become an ignition source as well as the control box 13. Embodiment 1 is described for refrigerant leakage during deactivation of the heat source unit (deactivation of the compressor 1 and deactivation of the air-sending device 6) and is provided to achieve effective discharge of the leaked refrigerant.

When refrigerant is leaked in the vicinity of the compressor 1, the refrigerant starts to accumulate in the lower part of the machine chamber 12. When the leaked refrigerant enters the control box 13 and the detected value of the refrigerant concentration detection unit 14 becomes equal to or higher than the flammable limit concentration, the control circuit 15 activates the air-sending device 6.

(Airflow in response to the rotation direction of the air-sending device 6)

Fig. 5 is an explanatory view of a rotation direction of the air-sending device 6 of Fig. 1 and an airflow in the heat source unit in response to the rotation direction. With reference to Fig. 5, the airflow during each of forward rotation and reverse rotation of the air-sending device 6 will be described.

[Forward rotation]

The forward rotation is rotation in a direction in which the outside air flows through the heat source side heat exchanger 3 and then the air-sending device 6 when the air-sending device 6 performs rotation (Fig. 5 (a)). During normal operation, the air-sending device 6 performs forward rotation. When the air-sending device 6 performs forward rotation, there are mainly two airflows in the housing 100a. More specifically, there are a straight flow (arrow 21) passing through the heat source side heat exchanger 3 and the air-sending device 6 and a swirling flow (arrow 22) in which the outside air suctioned into the machine chamber 12 via the air ventilation port 7 passes through the control box 13 and the heat exchange chamber 11 and is discharged to the outside. Because the flow indicated by the arrow 21 passing through the heat source side heat exchanger 3 is generated by a static pressure difference between the outside air and the inside of the heat exchange chamber 11, air flows along the fins of the heat source side heat exchanger 3.

[Reverse rotation]

The reverse rotation is rotation in a direction in which the outside air flows through the air-sending device 6 and then the heat source side heat exchanger 3 when the air-sending device 6 performs rotation (Fig. 5 (b)). When the air-sending device 6 performs reverse rotation, there are mainly two airflows in the housing 100a. More specifically, there are a straight flow (arrow 23) passing through the air-sending device 6 and the heat source side heat exchanger 3 and a swirling flow (arrow 24) passing through the control box 13 and the machine chamber 12 and is discharged to the outside via the air ventilation port 7. During reverse rotation, because a swirling component is added to an axial component of air blown out of the air-sending device 6, the straight flow (arrow 23) that flows toward the heat source side heat exchanger 3 becomes a turbulent flow, and a flow made of the swirling component of the blown air becomes a flow of the arrow 24.
To prevent ignition of the leaked refrigerant, it is important to quickly decrease the refrigerant concentration in the control box 13 having an electric contact, which may become an ignition source to be lower than the flammable limit concentration. In Embodiment 1, as seen from Fig. 5, the control box 13 is disposed at a position through which the swirling component of the airflow generated in the housing 100a by the air-sending device 6 passes. Thus, to quickly decrease the refrigerant concentration in the control box 13, a volume of air passing through the control circuit 15, more specifically, the volume of air of the airflow of the swirling component, is increased compared with that during normal operation. Whether the volume of air passing through the control circuit 15 can be increased compared with that during normal operation depends on the fan shape of the air-sending device 6 and the airflow path configuration in the housing 100a.

(Discharge of leaked refrigerant)

Next, an optimal air-sending device control for discharge of the leaked refrigerant to the outside of the housing 100a considering the effect on the volume of air passing through the control box 13 by the fan shape and the airflow path configuration in the housing 100a will be described. The optimal air-sending device control described herein is control for increasing the volume of air from the air-sending device 6 passing through the control box 13 to be the maximum air volume to quickly decrease the refrigerant concentration in the control box 13.
Table 1 is a summary of the air-sending device control at the time of refrigerant leakage detection.

[Table 1]

| Air-sending device | Relation between $\alpha$ and $\beta$ | Air-sending device control at the time of refrigerant leakage detection |
|---|---|---|
| (1) Air-sending device having the same volume of air in forward rotation and reverse rotation | | Reverse rotation |
| (2) Air-sending device having a larger volume of air in reverse rotation than in forward rotation | | Reverse rotation |
| (3) Air-sending device having a larger volume of air in forward rotation than in reverse rotation | (3.1) $Q_3 > Q_1$ | Reverse rotation |
| | (3.2) $Q_3 = Q_1$ | Forward rotation |

The air-sending device 6 has different properties of volume of air during forward rotation and reverse rotation depending on the fan shapes. Any air-sending device may be used for the air-sending device 6 of the heat source unit 100. In this description, the types of the air-sending device 6 are classified into (1) to (3) shown below depending on the difference in volume of air (total volume of air) in the same rotation speed in each of forward rotation and reverse rotation, and the optimal air-sending device control at the time of refrigerant leakage detection for each type of the air-sending device 6 will be described.

(1) Air-sending device having the same volume of air in forward rotation and reverse rotation

When the air-sending device 6 performs reverse rotation, the airflow that passes through the heat source side heat exchanger 3 becomes a turbulent flow as described above. As a result, airflow resistance of the heat source side heat exchanger 3 increases during reverse rotation compared with that during forward rotation. Since the airflow resistance of the heat source side heat exchanger 3 increases during reverse rotation, the flow toward the control box 13 (the arrow 24 in Fig. 5) increases during reverse rotation. That is, the volume of air that passes through the control box 13 during reverse rotation increases compared with that during forward rotation. Thus, the air-sending device 6 performs reverse rotation when refrigerant leakage is detected. As a result, actuation of the air-sending device 6 can make the discharge amount of the leaked refrigerant in the control box 13 to be the maximum discharge amount.

(2) Air-sending device having a larger volume of air in reverse rotation than in forward rotation

When the air-sending device 6 performs reverse rotation, the volume of air that passes through the control box 13 during reverse rotation generally increases compared with that during forward rotation since airflow resistance of the heat source side heat exchanger 3 increases as described above. Moreover, in "the air-sending device 6 having a larger volume of air in reverse rotation than in forward rotation," the volume of air that passes through the control box 13 during reverse rotation increases compared with that during forward rotation. Thus, the air-sending device 6 performs reverse rotation when refrigerant leakage is detected. As a result, actuation of the air-sending device 6 can make the discharge amount of the leaked refrigerant in the control box 13 to be the maximum discharge amount.

(3) Air-sending device having a larger volume of air in forward rotation than in reverse rotation

The volume of air that passes through the control box 13 varies depending on the airflow resistance (volume of air) of the heat source side heat exchanger 3. The "total volume of air Q during forward rotation" is expressed by Equation (1).
[Math 1]

$$Q = Q_1 + Q_2 \qquad (1)$$

$Q_1$ represents the "volume of air of the control box 13 during forward rotation," $Q_2$ represents the "volume of air of the heat source side heat exchanger 3 during forward rotation," and both are preset values.

The "total volume of air during reverse rotation" is defined as $\beta$ times ($0 < \beta < 1$) of the "total volume of air Q during forward rotation" under an assumption that the "volume of air $Q_3$ of the control box 13 during reverse rotation" is equal to the "volume of air $Q_1$ of the control box 13 during forward rotation" ($Q_3 = Q_1$). Then, the "total volume of air $\beta Q$ during reverse rotation" can be expressed by Equation (2) by using a correction factor $\alpha$ considering the airflow resistance of the airflow path configuration in the housing 100a (in particular, the airflow resistance due to the heat source side heat exchanger 3).
[Math 2]

$$\beta Q = Q_3 + \alpha Q_2 \qquad (2)$$

The correction factor $\alpha$ is a value that represents an effect on the volume of air that flows through the heat source side heat exchanger 3 by a change in straightness of airflow due to variation in swirling component (variation in turbulent component) of the airflow in the housing caused by difference in rotation directions of the air-sending device 6. Further, since the volume of air that passes through the heat source side heat exchanger 3 when the air-sending device 6 performs reverse rotation decreases compared with that in forward rotation, the correction factor $\alpha$ is a value within the range of $0 < \alpha < 1$.

The correction factor $\alpha$ can be calculated from Equation (3) by modifying Equation (2).
[Math 3]

$$\alpha = \frac{\beta Q - Q_3}{Q_2} \qquad (3)$$

The "volume of air $Q_3$ of the control box 13 during reverse rotation" can be expressed by Equation (4) by modifying Equation (2).
[Math 4]

$$Q_3 = \beta Q - \alpha Q_2 \qquad (4)$$

When the relation between $\alpha$ and $\beta$ indicates that the "volume of air $Q_3$ of the control box 13 during reverse rotation" calculated by Equation (4) in the actual heat source unit 100 is larger than the "volume of air $Q_1$ of the control box 13 during forward rotation," the air-sending device 6 performs reverse rotation ((3.1) in Table 1). On the other hand, when the relation between $\alpha$ and $\beta$ indicates that the "volume of air $Q_3$ of the control box 13 during reverse rotation" is equal to the "volume of air $Q_1$ of the control box 13 during forward rotation," the air-sending device 6 performs forward rotation ((3.2) in Table 1).

Further, Q, $Q_1$, $Q_2$ are preset values as described above, and for example, it is assumed that Q = 4, $Q_1$ = 1, and $Q_2$ = 3. When $\beta$ is 0.9, $\alpha$ = (0.9 × 4-1) / 3 = 0.86. Thus, when $\alpha$ is lower than 0.86, $Q_3$ is equal to or larger than $Q_1$, and the volume of air that passes through the control box 13 during reverse rotation decreases compared with that during forward rotation. Thus, when the correction factor $\alpha$ is lower than 0.86, the air-sending device 6 performs reverse rotation at the time of refrigerant leakage detection ((3.1) in Table 1). On the other hand, when $\alpha$ is equal to or larger than 0.86, the volume of air that passes through the control box 13 during reverse rotation decreases compared with that during forward rotation. Thus, when the correction factor $\alpha$ is equal to or larger than 0.86, the air-sending device 6 performs forward rotation similarly to during the normal operation ((3.2) in Table 1). In addition to that, the air-sending device 6 is controlled so that the volume of air from the air-sending device 6 to pass through the control box 13 is increased to the maximum. Further, $\alpha$ and $\beta$ are values that are calculated in advance on the basis of simulation or another related process.

In comparison between (3.1) and (3.2) in Table 1, (3.1) has a configuration that achieves higher performance as a refrigeration cycle considering the volume of air close to the heat source side heat exchanger 3. Thus, the configuration of (3.1) is more desirable.

The fan shape of the air-sending device 6, the airflow path configuration of the housing 100a, and the volume of air that passes through the control box 13 have the relation as described above. Since which one of the (1), (2), (3.1), and (3.2) is applied to the heat source unit 100 is determined during design stage, control is preprogrammed in the control circuit 15 so that an appropriate air-sending device control can be performed.

(Control flow)

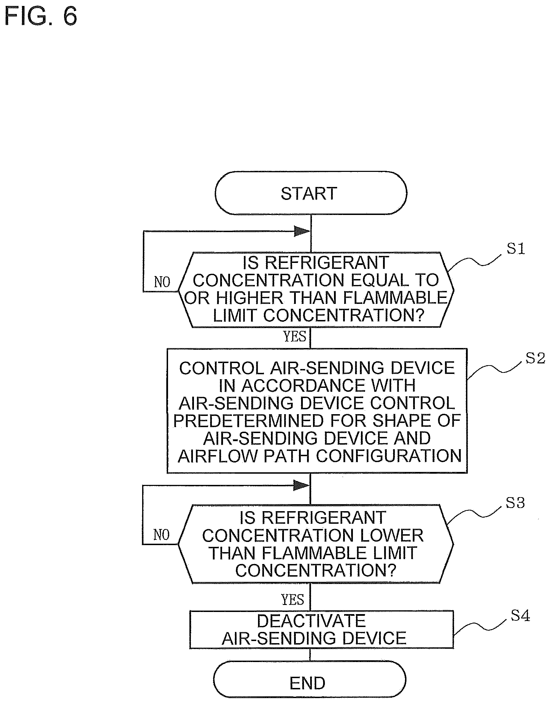

Fig. 6 is a flow chart showing an air-sending device operation of the heat source unit 100 according to Embodiment 1 of the present invention.

The control circuit 15 of the heat source unit 100 causes the air-sending device 6 to perform forward rotation during activation of the compressor. Further, during deactivation of the heat source unit 100, that is, during deactivation of the compressor 1 and the air-sending device 6, the control circuit 15 checks whether the refrigerant concentration is equal to or higher than a predetermined flammable limit concentration on the basis of the refrigerant concentration detected by the refrigerant concentration detection unit 14 (S1).

When the refrigerant concentration detected by the refrigerant concentration detection unit 14 is equal to or higher than the flammable limit concentration (S2), the control circuit 15 actuates the air-sending device 6 and controls the air-sending device 6 in accordance with control for any of the (1), (2), (3.1), and (3.2) in Table 1, which is predetermined for the fan shape of the air-sending device 6 and the airflow path configuration (S3). As a result, the volume of air from the air-sending device 6 to pass through the control box 13 is increased to the maximum. Further, when the refrigerant concentration detected by the refrigerant concentration detection unit 14 becomes lower than the flammable limit concentration (S3), the control circuit 15 deactivates the air-sending device 6 (S4).

(Advantageous effect)

As described above, according to Embodiment 1, since the refrigerant concentration detection unit 14 is disposed in the control box 13, detection accuracy for the refrigerant concentration in the vicinity of the control circuit 15 having an electric contact can be improved. Thus, when the actual refrigerant concentration in the vicinity of the control circuit 15 becomes equal to or higher than the flammable limit concentration, the air-sending device 6 can be reliably activated, thereby improving reliability of ignition prevention.

Furthermore, since the detection accuracy for the refrigerant concentration in the vicinity of ignition source is improved, a risk of deactivating the air-sending device 6 while the discharge of air in the control box 13 remains insufficient can be prevented.

Further, the air-sending device control is performed considering the fan shape of the air-sending device 6 and the airflow path configuration in the housing 100a so that the volume of air from the air-sending device 6 to pass through the control box 13 when refrigerant leakage is detected can be increased to the maximum. Thus, the refrigerant concentration of the control box 13 can be quickly decreased to be lower than the flammable limit concentration when refrigerant leakage is detected, thereby reducing a risk of ignition of refrigerant.

Further, since any of the mesh structure 16a, the guide 16b, and the bend 16c is disposed at the air ventilation port 16 of the control box 13, it is possible to prevent infiltration of rainwater and drained water into the control box 13.

Embodiment 2

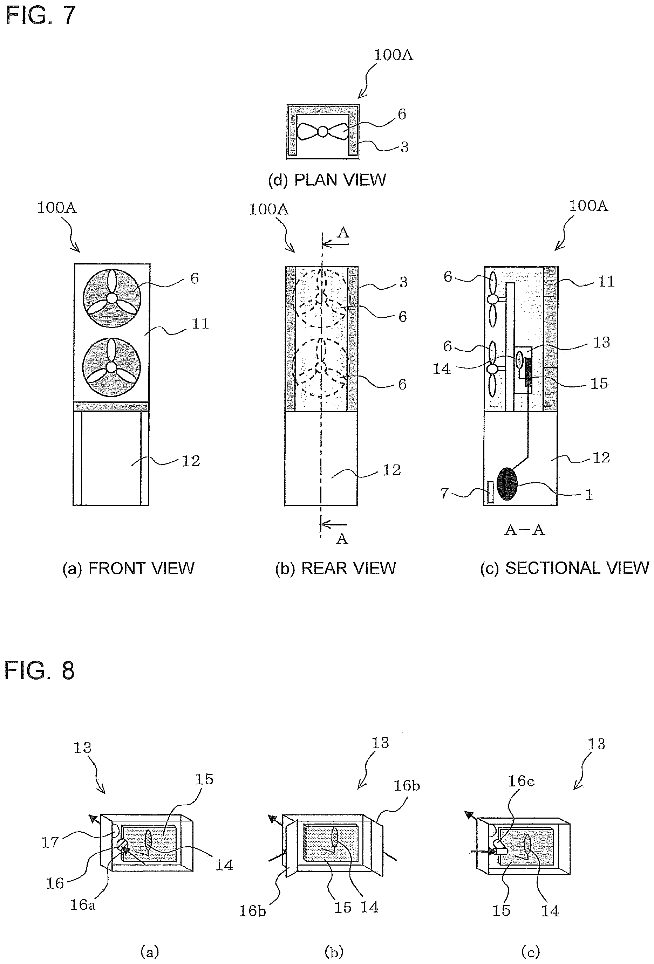

Embodiment 2 differs from Embodiment 1 in the position of the control box 13 and the air-sending device control depending on the difference in the position. The remaining factors such as a configuration and operation of the refrigerant circuit are the same as those of Embodiment 1. In Figs. 7 to 9 described below, the configuration that is the same as that of Embodiment 1 is denoted by the same reference signs as that of Embodiment 1, and the detailed description thereof is omitted. Further, the modified example applied to the configuration that is similar to that of Embodiment 1 can also be applied to Embodiment 2.

Fig. 7 is a view showing the heat source unit 100A according to Embodiment 2 of the present invention. (a) is a front view, (b) is a rear view, (c) is a sectional view, and (d) is a plan view. Fig. 8 is a view showing the control box 13 of Fig. 7. In Fig. 8, the arrow indicates a flow of air.

In the heat source unit 100A of Embodiment 2, the control box 13 is disposed at a position between the air-sending device 6 and the heat source side heat exchanger 3. In other words, while the control box 13 in Embodiment 1 is disposed at a position through which the swirling component of the airflow generated in the housing 100a by the air-sending device 6 passes, the control box 13 in Embodiment 2 is disposed at a position through which the straight component of the airflow passes. Further, the air ventilation port 16 is formed on the control box 13 at a position close to the heat exchange chamber 11 and an air ventilation port 17 is formed on the control box 13 at a position close to the heat source side heat exchanger 3.

In the heat source unit 100A having the above configuration, a water infiltration prevention unit that prevents infiltration of rainwater and drained water into the control box 13 may be provided, similarly to Embodiment 1, at the air ventilation port 16 of the control box 13 at a position close to the heat exchange chamber 11. Fig. 8 (a) shows the mesh structure 16a provided as an example of the water infiltration prevention unit. Further, Fig. 8 (b) shows the guide 16b provided as an example of the water infiltration prevention unit. Further, Fig. 8 (c) shows the bend 16c provided as an example of the water infiltration prevention unit.

(Airflow in response to the rotation direction of the air-sending device 6)

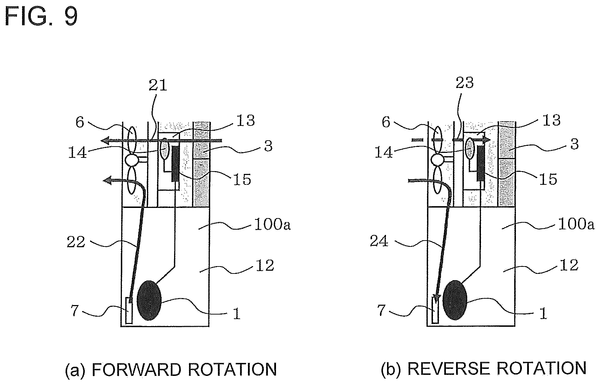

Fig. 9 is an explanatory view of a rotation direction of the air-sending device 6 of Fig. 7 and an airflow in the heat source unit in response to the rotation direction. With reference to Fig. 9, the airflow during each of forward rotation and reverse rotation of the air-sending device 6 will be described.

[Forward rotation]

The forward rotation is rotation in a direction in which the outside air sequentially flows through the heat source side heat exchanger 3, the control box 13 and the air-sending device 6 when the air-sending device 6 performs rotation (Fig. 8 (a)). During normal operation, the air-sending device 6 performs forward rotation. When the air-sending device 6 performs forward rotation, there are mainly two airflows in the housing 100a. More specifically, there are a straight flow (arrow 21) passing through the heat source side heat exchanger 3, control box 13 and the air-sending device 6 and a swirling flow (arrow 22) in which the outside air suctioned via the air ventilation port 7 passes through the air-sending device 6 and is discharged to the outside. Since the flow indicated by the arrow 21 passing through the heat source side heat exchanger 3 is generated by a static pressure difference between the outside air and the inside of the heat exchange chamber 11, air flows along the fins of the heat source side heat exchanger 3.

[Reverse rotation]

The reverse rotation is rotation in a direction in which the outside air sequentially flows through the air-sending device 6, the control box 13, and the heat source side heat exchanger 3 when the air-sending device 6 performs rotation (Fig. 8 (b)). When the air-sending device 6 performs reverse rotation, there are also mainly two airflows in the housing 100a. More specifically, there are a straight flow (arrow 23) passing through the air-sending device 6, the control box 13, and the heat source side heat exchanger 3 and a swirling flow (arrow 24) entering from the air-sending device 6 into the machine chamber 12 and is discharged to the outside via the air ventilation port 7. During reverse rotation, because a swirling component is added to an axial component of air blown out of the air-sending device 6, the straight flow (arrow 23) that flows toward the heat source side heat exchanger 3 becomes a turbulent flow, and a flow made of the swirling component of the blown air becomes a flow of the arrow 24.

(Discharge of leaked refrigerant)

An optimal air-sending device control for discharge of the leaked refrigerant to the outside of the housing 100a considering the effect of the fan shape of the air-sending device 6 and the airflow path configuration in the housing 100a will be described. The optimal air-sending device control described herein is control for increasing the volume of air from the air-sending device 6 passing through the control box 13 to be the maximum to quickly decrease the refrigerant concentration in the control box 13 similarly to Embodiment 1.

Table 2 is a summary of the air-sending device control at the time of refrigerant leakage detection.

[Table 2]

| Air-sending device | Air-sending device control at the time of refrigerant leakage detection |
|---|---|
| (1) Air-sending device having the same volume of air in forward rotation and reverse rotation | Either of forward rotation and reverse rotation is applicable |
| (2) Air-sending device having a larger volume of air in reverse rotation than in forward rotation | Reverse rotation |
| (3) Air-sending device having a larger volume of air in forward rotation than in reverse rotation | Forward rotation |

(1) Air-sending device having the same volume of air in forward rotation and reverse rotation

Since the volume of air is the same in forward rotation and reverse rotation, either of rotations is applicable when refrigerant leakage is detected. Further, the control circuit 15 increases the rotation speed of the air-sending device 6 to the maximum rotation speed of the device so that the volume of air from the air-sending device 6 to pass through the control box 13 can be increase to the maximum. As a result, actuation of the air-sending device 6 can make the discharge amount of the leaked refrigerant in the control box 13 to be the maximum discharge amount.

(2) Air-sending device having a larger volume of air in reverse rotation than in forward rotation

When the air-sending device 6 performs reverse rotation, the discharge amount of the leaked refrigerant in the control box 13 discharged by actuation of the air-sending device 6 can be the maximum.

(3) Air-sending device having a larger volume of air in forward rotation than in reverse rotation

When the air-sending device 6 performs forward rotation, actuation of the air-sending device 6 can make the discharge amount of the leaked refrigerant in the control box 13 to be the maximum discharge amount.

The control flow of the air-sending device operation in the heat source unit 100 according to Embodiment 2 is the same as that according to Embodiment 1 shown in Fig. 6. The control shown in Table 2 instead of the control shown in Table 1 is applied to the air-sending device control in S2.

As described above, according to Embodiment 2, the same advantageous effect as that of Embodiment 1 can be achieved.

In Embodiments 1 and 2, a separate type configuration having the heat source unit 100 and the load side unit 200 is described as an example of the air-conditioning apparatus. However, the load side heat exchanger 5 may also be disposed in the heat source unit 100 and may be formed as an integrated unit. In this case, the evaporator is formed of an air heat exchanger that exchanges heat with air similarly to a condenser, and the air-sending device 6 that provides air to the air heat exchanger is also provided. Alternatively, the air-conditioning apparatus may include a water heat exchanger that exchanges heat with water and brine. In the case of the air-conditioning apparatus including the water heat exchanger, a water circuit that transports a cooling target is provided. Further, the advantageous effect of the present invention can also be achieved by applying the present invention to the unit in which a plurality of units are joined and the water circuits are connected to each other to improve the capability.

Further, in Embodiments 1 and 2, the air-sending device control at the time of refrigerant leakage detection during deactivation of the heat source units 100 and 100A is described. However, a similar air-sending device control may also be possible at the time of refrigerant leakage detection during activation of the heat source unit 100 and 100A.

Reference Signs List

1 compressor, 2 four-way valve, 3 heat source side heat exchanger, 4 expansion valve, 5 load side heat exchanger, 6 air-sending device, 7 air ventilation port, 11 heat exchange chamber, 12 machine chamber, 13 control box, 14 refrigerant concentration detection unit, 15 control circuit, 16 air ventilation port, 16a mesh structure, 16b guide, 16c bend, 100 heat source unit, 17 air ventilation port, 100A heat source unit, 100a housing, 200 load side unit

**Claims**

1. A heat source unit (100, 100A) comprising:

   a housing (100a) including a machine chamber (12) incorporating a compressor (1) and an expansion valve (4) and having an air ventilation port allowing for ventilation with outside air and a heat exchange chamber (11) incorporating a heat exchanger (3) and an air-sending device (6) configured to cause air to pass through the heat exchanger (3);
   a control box (13) disposed in the housing (100a) at a position so that an airflow from the air-sending device (6) passes through the control box (13);
   a refrigerant concentration detection device (14) disposed in the control box (13) and configured to detect refrigerant concentration; and
   a control circuit (15) disposed in the control box (13) and configured to control the air-sending device (6),
   the air-sending device (6) performing forward rotation being rotation in a direction during a normal operation and reverse rotation being a direction opposite to the forward rotation, and
   **characterized by**:
   when refrigerant leakage is detected on a basis of a detection value of the refrigerant concentration detection device (14), the control circuit (15) being configured to control the air-sending device (6) to perform either of the forward rotation and the reverse rotation achieving a larger amount of a volume of air passing through the control box (13).

2. The heat source unit (100) of claim 1, wherein
   the control box (13) is disposed at a position so that a swirling component of an airflow from the air-sending device (6) passes through the control box (13),
   the air-sending device (6) performs the forward rotation during the normal operation to generate an airflow allowing outside air to flow through the heat exchanger (3) and the air-sending device (6) and discharging the air to an outside of the housing (100a), and is configured so that, when rotation speeds are the same in the forward rotation and the reverse rotation, the volume of air in the reverse rotation is the same as or larger than the volume of air in the forward rotation, and
   the control circuit (15) is configured to control the air-sending device (6) to perform the reverse rotation when refrigerant leakage is detected.

3. The heat source unit (100) of claim 1, wherein
   the control box (13) is disposed at a position so that a swirling component of an airflow from the air-sending device (6) passes through the control box (13),
   the air-sending device (6) performs the forward rotation during the normal operation to generate an airflow allowing outside air to flow through the heat exchanger (3) and the air-sending device (6) and discharging the air to an outside of the housing (100a), and is configured so that, when rotation speeds are the same in the forward rotation and the reverse rotation, the volume of air in the forward rotation is larger than the volume of air in the reverse rotation, and

when refrigerant leakage is detected, the control circuit (15) is configured to control the air-sending device (6) in accordance with air-sending device control predetermined depending on a fan shape of the air-sending device (6) and an airflow path configuration in the housing (100a).

4. The heat source unit (100) of claim 3, wherein
the fan shape of the air-sending device (6) and the airflow path configuration in the housing (100a) have a relation between $\alpha$ and $\beta$ so that a "volume of air $Q_3$ of the control box (13) during reverse rotation" of the air-sending device (6) calculated by a following equation is larger than a "volume of air $Q_1$ of the control box (13) during forward rotation" of the air-sending device (6), and the air-sending device control at a time of refrigerant leakage detection is for performing the reverse rotation of the air-sending device (6):

$$Q_3 = \beta Q - \alpha Q_2$$

Q: total volume of air during forward rotation
$Q_2$: volume of air of the heat exchanger (3) during forward rotation
$\alpha$: correction factor considering an airflow resistance of the airflow path configuration in the housing (100a) (0 < $\alpha$ < 1)
$\beta$: rate of a "total volume of air during reverse rotation" to a "total volume of air Q during forward rotation" when the "volume of air $Q_3$ of the control box (13) during reverse rotation" is the same as the "volume of air $Q_1$ of the control box (13) during forward rotation" (0 < $\beta$ < 1)

5. The heat source unit (100) of claim 3, wherein
the fan shape of the air-sending device (6) and the airflow path configuration in the housing (100a) have a relation between $\alpha$ and $\beta$ so that a "volume of air $Q_3$ of the control box (13) during reverse rotation" of the air-sending device (6) calculated by a following equation is equal to a "volume of air $Q_1$ of the control box (13) during forward rotation" of the air-sending device (6), and the air-sending device control at a time of refrigerant leakage detection is for performing the forward rotation of the air-sending device (6):

$$Q_3 = \beta Q - \alpha Q_2$$

Q: total volume of air during forward rotation
$Q_2$: volume of air of the heat exchanger (3) during forward rotation
$\alpha$: correction factor considering an airflow resistance of the airflow path configuration in the housing (100a) (0 < $\alpha$ < 1)
$\beta$: rate of a "total volume of air during reverse rotation" to a "total volume of air Q during forward rotation" when the "volume of air $Q_3$ of the control box (13) during reverse rotation" is the same as the "volume of air $Q_1$ of the control box (13) during forward rotation" (0 < $\beta$ < 1)

6. The heat source unit (100A) of claim 1, wherein
the control box (13) is disposed at a position so that a straight component of an airflow from the air-sending device (6) passes through the control box (13),
the air-sending device (6) is configured so that, when rotation speeds are the same in the forward rotation and the reverse rotation, the volume of air in the forward rotation is the same as the volume of air in the reverse rotation, and the control circuit (15) is configured to control the air-sending device (6) to perform the forward rotation or the reverse rotation when refrigerant leakage is detected.

7. The heat source unit (100A) of claim 1, wherein
the control box (13) is disposed at a position so that a straight component of an airflow from the air-sending device (6) passes through the control box (13),
the air-sending device (6) performs the forward rotation during the normal operation to generate an airflow allowing outside air to flow through the heat exchanger (3) and the air-sending device (6) and discharging the air to an outside of the housing (100a), and is configured so that, when rotation speeds are the same in the forward rotation and the reverse rotation, the volume of air in the reverse rotation is larger than the volume of air in the forward rotation, and the control circuit (15) is configured to control the air-sending device (6) to perform the reverse rotation when refrigerant leakage is detected.

**8.** The heat source unit (100A) of claim 1, wherein

the control box (13) is disposed at a position so that a straight component of an airflow from the air-sending device (6) passes through the control box (13),

the air-sending device (6) performs the forward rotation during the normal operation to generate an airflow allowing outside air to flow through the heat exchanger (3) and the air-sending device (6) and discharging the air to an outside of the housing (100a), and is configured so that, when rotation speeds are the same in the forward rotation and the reverse rotation, the volume of air in the forward rotation is larger than the volume of air in the reverse rotation, and the control circuit (15) is configured to control the air-sending device (6) to perform the forward rotation when refrigerant leakage is detected.

**9.** The heat source unit (100, 100A) of any one of claims 1 to 8, wherein the refrigerant concentration detection device (14) is configured to determine that refrigerant leakage is present when the detection value is equal to or higher than a predetermined flammable limit concentration.

**10.** The heat source unit (100, 100A) of claim 9, wherein the control circuit (15) is configured to deactivate an operation of the air-sending device (6) when the detection value is lower than the flammable limit concentration.

**11.** The heat source unit (100, 100A) of any one of claims 1 to 10, wherein a refrigerant being used is a flammable refrigerant.

**Patentansprüche**

**1.** Wärmequelleneinheit (100, 100A), umfassend:

ein Gehäuse (100a), umfassend eine Maschinenkammer (12), die einen Verdichter (1) und ein Expansionsventil (4) enthält, und aufweisend eine Belüftungsöffnung, die Belüftung mit Außenluft ermöglicht, und eine Wärmeaustauschkammer (11), die einen Wärmetauscher (3) und eine Luftsendeeinrichtung (6) enthält, die eingerichtet ist, zu bewirken, dass Luft den Wärmetauscher (3) passiert;

einen Steuerungskasten (13), der in dem Gehäuse (100a) an einer Position angeordnet ist, so dass ein Luftstrom von der Luftsendeeinrichtung (6) den Steuerungskasten (13) passiert;

eine Kältemittelkonzentrationserfassungseinrichtung (14), die in dem Steuerungskasten (13) angeordnet ist und eingerichtet ist, die Kältemittelkonzentration zu erfassen; und

eine Steuerungsschaltung (15), die in dem Steuerungskasten (13) angeordnet ist und eingerichtet ist, die Luftsendeeinrichtung (6) zu steuern,

wobei die Luftsendeeinrichtung (6) Vorwärtsdrehung, die eine Drehung in einer Richtung während eines normalen Betriebs ist, und Rückwärtsdrehung, die eine zur Vorwärtsdrehung entgegengesetzte Richtung ist, durchführt, und

**gekennzeichnet durch**:

wenn Kältemittelleckage auf Grundlage eines Erfassungswerts der Kältemittelkonzentrationserfassungseinrichtung (14) erfasst wird, die Steuerungsschaltung (15) eingerichtet ist, die Luftsendeeinrichtung (6) zu steuern, eines von der Vorwärtsdrehung und der Rückwärtsdrehung durchzuführen, so dass eine größere Menge eines den Steuerungskasten (13) passierenden Luftvolumens erzielt wird.

**2.** Wärmequelleneinheit (100) nach Anspruch 1, wobei

der Steuerungskasten (13) an einer Position angeordnet ist, so dass eine verwirbelnde Komponente eines Luftstroms von der Luftsendeeinrichtung (6) den Steuerungskasten (13) passiert,

die Luftsendeeinrichtung (6) während des normalen Betriebs die Vorwärtsdrehung durchführt, um einen Luftstrom zu erzeugen, der Außenluft ermöglicht, den Wärmetauscher (3) und die Luftsendeeinrichtung (6) zu durchströmen, und die Luft zu einer Außenseite des Gehäuses (100a) abgibt, und eingerichtet ist, so dass, wenn Drehgeschwindigkeiten in der Vorwärtsdrehung und der Rückwärtsdrehung gleich sind, das Luftvolumen in der Rückwärtsdrehung gleich ist wie oder größer ist als das Luftvolumen in der Vorwärtsdrehung, und die Steuerungsschaltung (15) eingerichtet ist, die Luftsendeeinrichtung (6) zu steuern, die Rückwärtsdrehung durchzuführen, wenn Kältemittelleckage erfasst ist.

**3.** Wärmequelleneinheit (100) nach Anspruch 1, wobei

der Steuerungskasten (13) an einer Position angeordnet ist, so dass eine verwirbelnde Komponente eines Luftstroms von der Luftsendeeinrichtung (6) den Steuerungskasten (13) passiert,

die Luftsendeeinrichtung (6) während des normalen Betriebs die Vorwärtsdrehung durchführt, um einen Luftstrom zu erzeugen, der Außenluft ermöglicht, den Wärmetauscher (3) und die Luftsendeeinrichtung (6) zu durchströmen, und die Luft zu einer Außenseite des Gehäuses (100a) abgibt, und eingerichtet ist, so dass, wenn die Drehgeschwindigkeiten in der Vorwärtsdrehung und der Rückwärtsdrehung gleich sind, das Luftvolumen in der Vorwärtsdrehung größer ist als das Luftvolumen in der Rückwärtsdrehung, und

wenn Kältemittelleckage erfasst ist, die Steuerungsschaltung (15) eingerichtet ist, die Luftsendeeinrichtung (6) zu steuern gemäß einer Luftsendeeinrichtungssteuerung, die in Abhängigkeit von einer Lüfterform der Luftsendeeinrichtung (6) und einer Luftstrompfadkonfiguration im Gehäuse (100a) vorherbestimmt ist.

4. Wärmequelleneinheit (100) nach Anspruch 3, wobei
die Lüfterform der Luftsendeeinrichtung (6) und die Luftstrompfadkonfiguration in dem Gehäuse (100a) eine Beziehung zwischen $\alpha$ und $\beta$ haben, so dass ein "Luftvolumen $Q_3$ des Steuerungskastens (13) während Rückwärtsdrehung" der Luftsendeeinrichtung (6), das durch eine folgende Gleichung berechnet wird, größer ist als ein "Luftvolumen $Q_1$ des Steuerungskastens (13) während Vorwärtsdrehung" der Luftsendeeinrichtung (6), und die Luftsendeeinrichtungssteuerung zu einem Zeitpunkt der Kältemittelleckage-Erfassung dazu dient, die Rückwärtsdrehung der Luftsendeeinrichtung (6) durchzuführen:

$$Q_3 = \beta Q - \alpha Q_2$$

Q: Luftgesamtvolumen während Vorwärtsdrehung

$Q_2$: Luftvolumen des Wärmetauschers (3) während Vorwärtsdrehung

$\alpha$: Korrekturfaktor unter Berücksichtigung eines Luftstromwiderstandes der Luftstrompfadkonfiguration im Gehäuse (100a) $(0 < \alpha < 1)$

$\beta$: Rate eines "Gesamtluftvolumens während Rückwärtsdrehung" gegenüber einem "Gesamtluftvolumen Q während Vorwärtsdrehung", wenn das "Luftvolumen $Q_3$ des Steuerungskastens (13) während Rückwärtsdrehung" gleich ist wie das "Luftvolumen $Q_1$ des Steuerungskastens (13) während Vorwärtsdrehung" $(0 < \beta < 1)$

5. Wärmequelleneinheit (100) nach Anspruch 3, wobei
die Lüfterform der Luftsendeeinrichtung (6) und die Luftstrompfadkonfiguration in dem Gehäuse (100a) eine Beziehung zwischen $\alpha$ und $\beta$ haben, so dass ein "Luftvolumen $Q_3$ des Steuerungskastens (13) während Rückwärtsdrehung" der Luftsendeeinrichtung (6), das durch eine folgende Gleichung berechnet wird, gleich ist wie ein "Luftvolumen $Q_1$ des Steuerungskastens (13) während Vorwärtsdrehung" der Luftsendeeinrichtung (6), und Luftsendeeinrichtungssteuerung zu einem Zeitpunkt der Kältemittelleckage-Erfassung dazu dient, die Vorwärtsdrehung der Luftsendeeinrichtung (6) durchzuführen:

$$Q_3 = \beta Q - \alpha Q_2$$

Q: Luftgesamtvolumen während Vorwärtsdrehung Q2: Luftvolumen des Wärmetauschers (3) während Vorwärtsdrehung

$\alpha$: Korrekturfaktor unter Berücksichtigung eines Luftstromwiderstands der Luftstrompfadkonfiguration im Gehäuse (100a) $(0 < \alpha < 1)$

$\beta$: Rate eines "Gesamtluftvolumens während Rückwärtsdrehung" gegenüber einem "Gesamtluftvolumen Q während Vorwärtsdrehung", wenn das "Luftvolumen $Q_3$ des Steuerungskastens (13) während Rückwärtsdrehung" gleich ist wie das "Luftvolumen $Q_1$ des Steuerungskastens (13) während Vorwärtsdrehung" $(0 < \beta < 1)$

6. Wärmequelleneinheit (100A) nach Anspruch 1, wobei

der Steuerungskasten (13) an einer Position angeordnet ist, so dass eine gerade Komponente eines Luftstroms von der Luftsendeeinrichtung (6) den Steuerungskasten (13) passiert,

die Luftsendeeinrichtung (6) eingerichtet ist, so dass, wenn die Drehgeschwindigkeiten in der Vorwärtsdrehung und der Rückwärtsdrehung gleich sind, das Luftvolumen in der Vorwärtsdrehung gleich ist wie das Luftvolumen in der Rückwärtsdrehung, und

die Steuerungsschaltung (15) eingerichtet ist, die Luftsendeeinrichtung (6) zu steuern, die Vorwärtsdrehung oder die Rückwärtsdrehung durchzuführen, wenn Kältemittelleckage erfasst ist.

**7.** Wärmequelleneinheit (100A) nach Anspruch 1, wobei

der Steuerungskasten (13) an einer Position angeordnet ist, so dass eine gerade Komponente eines Luftstroms von der Luftsendeeinrichtung (6) den Steuerungskasten (13) passiert, die Luftsendeeinrichtung (6) während des normalen Betriebs die Vorwärtsdrehung durchführt, um einen Luftstrom zu erzeugen, der Außenluft ermöglicht, den Wärmetauscher (3) und die Luftsendeeinrichtung (6) zu durchströmen, und die Luft zu einer Außenseite des Gehäuses (100a) abgibt, und eingerichtet ist, so dass, wenn Drehgeschwindigkeiten in der Vorwärtsdrehung und der Rückwärtsdrehung gleich sind, das Luftvolumen in der Rückwärtsdrehung größer ist als das Luftvolumen in der Vorwärtsdrehung, und die Steuerungsschaltung (15) eingerichtet ist, die Luftsendeeinrichtung (6) zu steuern, die Rückwärtsdrehung durchzuführen, wenn Kältemittelleckage erfasst ist.

**8.** Wärmequelleneinheit (100A) nach Anspruch 1, wobei

der Steuerungskasten (13) an einer Position angeordnet ist, so dass eine gerade Komponente eines Luftstroms von der Luftsendeeinrichtung (6) den Steuerungskasten (13) passiert, die Luftsendeeinrichtung (6) während des normalen Betriebs die Vorwärtsdrehung durchführt, um einen Luftstrom zu erzeugen, der Außenluft ermöglicht, den Wärmetauscher (3) und die Luftsendeeinrichtung (6) zu durchströmen, und die Luft zu einer Außenseite des Gehäuses (100a) abgibt, und eingerichtet ist, so dass, wenn die Drehgeschwindigkeiten in der Vorwärtsdrehung und der Rückwärtsdrehung gleich sind, das Luftvolumen in der Vorwärtsdrehung größer ist als das Luftvolumen in der Rückwärtsdrehung, und die Steuerungsschaltung (15) eingerichtet ist, die Luftsendeeinrichtung (6)zu steuern, die Vorwärtsdrehung durchzuführen, wenn Kältemittelleckage erfasst ist.

**9.** Wärmequelleneinheit (100, 100A) nach einem der Ansprüche 1 bis 8, wobei die Kältemittelkonzentrationserfassungseinrichtung (14) eingerichtet ist, zu bestimmen, dass Kältemittelleckage vorliegt, wenn der Erfassungswert gleich ist wie oder höher ist als eine vorherbestimmte Entflammbare-Grenze-Konzentration.

**10.** Wärmequelleneinheit (100, 100A) nach Anspruch 9, wobei die Steuerungsschaltung (15) eingerichtet ist, einen Betrieb der Luftsendeeinrichtung (6) zu deaktivieren, wenn der Erfassungswert niedriger ist als die Entflammbare-Grenze-Konzentration.

**11.** Wärmequelleneinheit (100, 100A) nach einem der Ansprüche 1 bis 10, wobei ein eingesetztes Kältemittel ein entflammbares Kältemittel ist.

**Revendications**

**1.** Unité de source de chaleur (100, 100A) comprenant :

un boîtier (100a) comprenant une chambre de machine (12) incorporant un compresseur (1) et une vanne de détente (4) et comportant un orifice de ventilation d'air permettant la ventilation avec l'air extérieur et une chambre d'échange de chaleur (11) incorporant un échangeur de chaleur (3) et un dispositif de soufflage d'air (6) configuré pour amener l'air à s'écouler à travers l'échangeur de chaleur (3) ;
un boîtier de commande (13) disposé dans le boîtier (100a) à une position telle qu'un flux d'air depuis le dispositif de soufflage d'air (6) traverse le boîtier de commande (13) ;
un dispositif de détection de concentration de fluide frigorigène (14) disposé dans le boîtier de commande (13) et configuré pour détecter une concentration de fluide frigorigène ; et
un circuit de commande (15) disposé dans le boîtier de commande (13) et configuré pour commander le dispositif de soufflage d'air (6),
le dispositif de soufflage d'air (6) effectuant une rotation avant qui est une rotation dans un sens au cours d'un fonctionnement normal et une rotation inverse qui est dans un sens opposé à la rotation avant, et
**caractérisé en ce que** :
lorsqu'une fuite de fluide frigorigène est détectée sur la base d'une valeur de détection du dispositif de détection de concentration de fluide frigorigène (14), le circuit de commande (15) est configuré pour commander le dispositif de soufflage d'air (6) pour effectuer l'une parmi la rotation avant et la rotation inverse de façon à obtenir une plus grande quantité d'un volume d'air traversant le boîtier de commande (13).

**2.** Unité de source de chaleur (100) selon la revendication 1, dans laquelle
le boîtier de commande (13) est disposé à une position telle qu'une composante de tourbillonnement d'un flux d'air provenant du dispositif de soufflage d'air (6) traverse le boîtier de commande (13),
le dispositif de soufflage d'air (6) effectue la rotation avant pendant le fonctionnement normal pour générer un flux d'air permettant à l'air extérieur de s'écouler à travers l'échangeur de chaleur (3) et le dispositif de soufflage d'air (6) et évacuant l'air à l'extérieur du boîtier (100a), et est configuré de sorte que, lorsque les vitesses de rotation sont identiques dans la rotation avant et la rotation inverse, le volume d'air dans la rotation inverse est égal ou supérieur au volume d'air dans la rotation avant, et
le circuit de commande (15) est configuré pour commander le dispositif de soufflage d'air (6) pour effectuer la rotation inverse lorsqu'une fuite de fluide frigorigène est détectée.

**3.** Unité de source de chaleur (100) selon la revendication 1, dans laquelle
le boîtier de commande (13) est disposé à une position telle que une composante de tourbillonnement d'un flux d'air provenant du dispositif de soufflage d'air (6) traverse le boîtier de commande (13),
le dispositif de soufflage d'air (6) effectue la rotation avant pendant le fonctionnement normal pour générer un flux d'air permettant à l'air extérieur de s'écouler à travers l'échangeur de chaleur (3) et le dispositif de soufflage d'air (6) et évacuant l'air à l'extérieur du boîtier (100a), et est configuré de sorte que, lorsque les vitesses de rotation sont identiques dans la rotation avant et la rotation inverse, le volume d'air dans la rotation avant est supérieur au volume d'air dans la rotation inverse, et
lorsqu'une fuite de fluide frigorigène est détectée, le circuit de commande (15) est configuré pour commander le dispositif de soufflage d'air (6) conformément à une commande de dispositif de soufflage d'air prédéterminée suivant une forme de ventilateur du dispositif de soufflage d'air (6) et une configuration de trajet de flux d'air dans le boîtier (100a).

**4.** Unité de source de chaleur (100) selon la revendication 3, dans laquelle
la forme de ventilateur du dispositif de soufflage d'air (6) et la configuration de trajet de flux d'air dans le boîtier (100a) ont une relation entre $\alpha$ et $\beta$ telle qu'un « volume d'air $Q_3$ du boîtier de commande (13) pendant la rotation inverse » du dispositif de soufflage d'air (6) calculé par une équation suivante est supérieur à un « volume d'air $Q_1$ du boîtier de commande (13) pendant la rotation avant » du dispositif de soufflage d'air (6), et la commande du dispositif de soufflage d'air à un temps de détection de fuite de fluide frigorigène est destinée à effectuer la rotation inverse du dispositif de soufflage d'air (6) :

$$Q_3 = \beta Q - \alpha Q_2$$

Q : volume total d'air pendant la rotation avant
$Q_2$ : volume d'air de l'échangeur de chaleur (3) pendant la rotation avant
$\alpha$ : facteur de correction prenant en compte une résistance au flux d'air de la configuration de trajet de flux d'air dans le boîtier (100a) (0 < $\alpha$ < 1)
$\beta$ : rapport du « volume total d'air pendant la rotation inverse » au « volume total d'air Q pendant la rotation avant » lorsque le «volume d'air $Q_3$ du boîtier de commande (13) pendant la rotation inverse » est égal au « volume d'air $Q_1$ du boîtier de commande (13) pendant la rotation avant » (0 < $\beta$ < 1).

**5.** Unité de source de chaleur (100) selon la revendication 3, dans laquelle
la forme de ventilateur du dispositif de soufflage d'air (6) et la configuration de trajet de flux d'air dans le boîtier (100a) ont une relation entre $\alpha$ et $\beta$ telle qu'un « volume d'air $Q_3$ du boîtier de commande (13) pendant la rotation inverse » du dispositif de soufflage d'air (6) calculé par une équation suivante est égal à un « volume d'air $Q_1$ du boîtier de commande (13) pendant la rotation avant » du dispositif de soufflage d'air (6), et la commande du dispositif de soufflage d'air à un temps de détection de fuite de fluide frigorigène est destinée à effectuer la rotation inverse du dispositif de soufflage d'air (6) :

$$Q_3 = \beta Q - \alpha Q_2$$

Q : volume total d'air pendant la rotation avant
$Q_2$: volume d'air de l'échangeur de chaleur (3) pendant la rotation avant
$\alpha$ : facteur de correction prenant en compte une résistance au flux d'air de la configuration de trajet de flux d'air dans le boîtier (100a) (0 < $\alpha$ < 1)

β : rapport du « volume total d'air pendant la rotation inverse » au « volume total d'air Q pendant la rotation avant » lorsque le «volume d'air $Q_3$ du boîtier de commande (13) pendant la rotation inverse » est égal au « volume d'air $Q_1$ du boîtier de commande (13) pendant la rotation avant » $(0 < \beta < 1)$.

6. Unité de source de chaleur (100A) selon la revendication 1, dans laquelle
le boîtier de commande (13) est disposé à une position telle qu'une composant rectiligne d'un flux d'air provenant du dispositif de soufflage d'air (6) traverse le boîtier de commande (13),
le dispositif de soufflage d'air (6) est configuré de sorte que, lorsque les vitesses de rotation sont identiques dans la rotation avant et la rotation inverse, le volume d'air dans la rotation avant est égal au volume d'air dans la rotation inverse, et
le circuit de commande (15) est configuré pour commander le dispositif de soufflage d'air (6) pour effectuer la rotation avant ou la rotation inverse lorsqu'une fuite de fluide frigorigène est détectée.

7. Unité de source de chaleur (100A) selon la revendication 1, dans laquelle
le boîtier de commande (13) est disposé à une position telle qu'une composante rectiligne d'un flux d'air provenant du dispositif de soufflage d'air (6) traverse le boîtier de commande (13),
le dispositif de soufflage d'air (6) effectue la rotation avant pendant le fonctionnement normal pour générer un flux d'air permettant à l'air extérieur de s'écouler à travers l'échangeur de chaleur (3) et le dispositif de soufflage d'air (6) et évacuant l'air à l'extérieur du boîtier (100a), et est configuré de sorte que, lorsque les vitesses de rotation sont identiques dans la rotation avant et la rotation inverse, le volume d'air dans la rotation inverse est supérieur au volume d'air dans la rotation avant, et
le circuit de commande (15) est configuré pour commander le dispositif de soufflage d'air (6) pour effectuer la rotation inverse lorsqu'une fuite de fluide frigorigène est détectée.

8. Unité de source de chaleur (100A) selon la revendication 1, dans laquelle
le boîtier de commande (13) est disposé à une position telle qu'une composante rectiligne d'un flux d'air provenant du dispositif de soufflage d'air (6) traverse le boîtier de commande (13),
le dispositif de soufflage d'air (6) effectue la rotation avant pendant le fonctionnement normal pour générer un flux d'air permettant à l'air extérieur de s'écouler à travers l'échangeur de chaleur (3) et le dispositif de soufflage d'air (6) et évacuant l'air à l'extérieur du boîtier (100a), et est configuré de sorte que, lorsque les vitesses de rotation sont égales dans la rotation avant et la rotation inverse, le volume d'air dans la rotation avant est supérieur au volume d'air dans la rotation inverse, et
le circuit de commande (15) est configuré pour commander le dispositif de soufflage d'air (6) pour effectuer la rotation avant lorsqu'une fuite de fluide frigorigène est détectée.

9. Unité de source de chaleur (100, 100A) selon l'une quelconque des revendications 1 à 8, dans laquelle le dispositif de détection de concentration de fluide frigorigène (14) est configuré pour déterminer qu'une fuite de fluide frigorigène est présente lorsque la valeur de détection est égale ou supérieure à une concentration limite d'inflammabilité prédéterminée.

10. Unité de source de chaleur (100, 100A) selon la revendication 9, dans laquelle le circuit de commande (15) est configuré pour désactiver un fonctionnement du dispositif de soufflage d'air (6) lorsque la valeur de détection est inférieure à la concentration limite d'inflammabilité.

11. Unité de source de chaleur (100, 100A) selon l'une quelconque des revendications 1 à 10, dans laquelle un fluide frigorigène étant utilisé est un fluide frigorigène inflammable.

## FIG. 1

## FIG. 2

(d) PLAN VIEW

(a) FRONT VIEW

(b) REAR VIEW

(c) SECTIONAL VIEW

## FIG. 3

## FIG. 4

(a)                    (b)

## FIG. 5

(a) FORWARD ROTATION        (b) REVERSE ROTATION

FIG. 6

```
        ┌─────────────────┐
        │      START      │
        └────────┬────────┘
                 │
    ┌────────────▼──────────────┐
    │   IS REFRIGERANT          │  S1
NO  │ CONCENTRATION EQUAL TO    │
◄───│ OR HIGHER THAN FLAMMABLE  │
    │  LIMIT CONCENTRATION?     │
    └────────────┬──────────────┘
              YES │
    ┌─────────────▼─────────────┐
    │ CONTROL AIR-SENDING DEVICE│  S2
    │     IN ACCORDANCE WITH    │
    │  AIR-SENDING DEVICE CONTROL│
    │ PREDETERMINED FOR SHAPE OF│
    │   AIR-SENDING DEVICE AND  │
    │ AIRFLOW PATH CONFIGURATION│
    └─────────────┬─────────────┘
                  │
    ┌─────────────▼─────────────┐
    │   IS REFRIGERANT          │  S3
NO  │ CONCENTRATION LOWER       │
◄───│ THAN FLAMMABLE LIMIT      │
    │   CONCENTRATION?          │
    └─────────────┬─────────────┘
              YES │
    ┌─────────────▼─────────────┐
    │       DEACTIVATE          │  S4
    │   AIR-SENDING DEVICE      │
    └─────────────┬─────────────┘
        ┌─────────▼───────┐
        │      END        │
        └─────────────────┘
```

# FIG. 7

(d) PLAN VIEW

(a) FRONT VIEW

(b) REAR VIEW

(c) SECTIONAL VIEW

# FIG. 8

(a)

(b)

(c)

FIG. 9

(a) FORWARD ROTATION          (b) REVERSE ROTATION

**EP 3 029 397 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3523584 B

- WO 2012049710 A